# EUROPÄISCHE PATENTANMELDUNG

(11) **EP 1 035 340 A2**
(43) Veröffentlichungstag der Anmeldung: **13.09.2000**
(21) Anmeldenummer: 99123629.0
(22) Anmeldetag: 27.11.1999
(51) Int. Cl.: F16C 33/74

(54) **Lagerdichtungsanordnung**

(30) Priorität: 06.03.1999 DE 19909922
(71) Anmelder: ROBERT BOSCH GMBH, 70442 Stuttgart (DE)
(72) Erfinder: Krimmer, Erwin, 73655 Pluederhausen (DE); Lorenz, Christian, 73434 Aalen-Unterrombach (DE)

(57) **Zusammenfassung**

Es soll eine einfache Lagerdichtungsanordnung geschaffen werden, die aus möglichst wenigen, einfach herstellbaren Bauteilen besteht und trotzdem eine sichere, dauerhaltbare und dichte Lagerung und Abdichtung ergibt.

Bei der hier vorgeschlagenen Lagerdichtungsanordnung (4) mit einem Lagerelement (6) hat das Lagerelement (6) einen Lagerbereich (10) und einen Dichtbereich (12), wobei der Dichtbereich (12) zwecks Abdichtung mit einem Spannelement-Dichtelement (8) gegen eine Dichtfläche vorgespannt wird.

Die Lagerdichtungsanordnung ist insbesondere bei Kraftfahrzeugen an Stellen vorgesehen, an denen mittelmäßige Beanspruchungen auftreten.

## Beschreibung

### Stand der Technik

Die Erfindung geht aus von einer Lagerdichtungsanordnung nach der Gattung des Anspruchs 1.

Zur Lagerung und Abdichtung eines ersten Körpers in einem zweiten Körper, wobei der erste Körper beispielsweise eine gegenüber dem zweiten Körper drehbare und/oder axial verschiebbare Stange ist, sind die verschiedensten Anordnungen bekannt. Dabei wird beispielsweise eine Kunststoff-Lagerbuchse eingesetzt, die ausschließlich Lagerfunktionen und Führungsfunktionen besitzt. Zusätzlich ist dann noch ein Dichtring, beispielsweise ein O-Ring, ein Gleitring, ein Nutring usw. zum Abdichten eines zwischen den beiden Körpern vorhandenen Spaltes oder Abstands vorgesehen.

Der Aufwand zum Herstellen derartiger Lagerungen und Abdichtungen ist zwar relativ klein, wenn man nur ein einzelnes Stück betrachtet, aber trotzdem ergibt sich insgesamt betrachtet ein relativ hoher Aufwand, weil diese Lager- und Dichtungsanordnungen häufig in großer Stückzahl benötigt werden. Deshalb summiert sich insgesamt betrachtet ein erheblicher Aufwand und deshalb bedeutet bereits eine kleine Verringerung des Aufwands an jedem Stück insgesamt betrachtet eine erhebliche Reduzierung des Aufwands und dadurch eine erheblicher Senkung der aufzuwendenden Kosten.

Die Patentschrift US 2,981,573 zeigt eine Lageranordnung aus Kunststoff, bei der zum Abdichten und Lagern ein gemeinsames Element verwendet wird. Ein Bereich dient zum Lagern und ein Bereich ist zum Abdichten vorgesehen. Hier besteht jedoch das Problem, daß trotz einer relativ aufwendigen Formgebung der Bereich zum Abdichten seine Aufgabe nicht zufriedenstellend und zuverlässig erfüllen kann. Deshalb sind in dieser Patentschrift weitere Ausführungen gezeigt, bei denen im Dichtbereich ein den Dichtbereich vorspannendes Spannelement vorgesehen ist. Allerdings ist dafür bei den gezeigten Ausführungen der Aufwand ziemlich hoch und es kann kaum eine zufriedenstellende Dichtwirkung erwartet werden. Von besonderem Nachteil ist, daß das Spannelement ständig unter Zugspannung steht und deshalb kann für das Spannelement kein Werkstoff verwendet werden, dessen Zugspannung bei längerer Benutzung langsam nachläßt. Bei so gut wie allen Kunststoffen läßt die Zugspannung im Laufe der Zeit nach, weshalb bei der bekannten Ausführung kein kostengünstiger Kunststoff verwendet werden kann. Wegen dem besonderen Platzbedarf für das Spannelement baut die bekannte Ausführung ziemlich groß.

Die deutsche Patentschrift DE 44 09 627 C1 zeigt eine Lagerdichtungsanordnung mit einem Lagerelement zum Lagern einer beweglichen Stange oder Welle, und zur Abdichtung ist mindestens an einer Stirnseite des Lagerelements eine Dichtlippe angeformt. Zusätzlich befindet sich im Bereich der Dichtlippe zwischen dem Lagerelement und dem Gehäuse ein O-Ring. Der O-Ring ist in einem Ringraum angeordnet, dessen Volumen kleiner als das Volumen des O-Rings ist, derart, daß der O-Ring den Ringraum nicht nur ausfüllt, sondern durch den Schlitz nach außen gedrückt ist.

Weil der O-Ring in einem Ringraum eingebaut ist, dessen Volumen kleiner als das Volumen des O-Rings ist, kann der O-Ring nicht elastisch federn. Der O-Ring verliert dadurch vollkommen seine elastische Federwirkung. Dies gilt für jeden Werkstoff. Auch wenn der O-Ring aus einem hochelastischen Werkstoff gefertigt ist, verliert er seine elastische Wirkung, sobald er in einem so engen Raum eingebaut ist, daß ein elastisches Ausweichen nicht mehr möglich ist. Ein weiterer Nachteil bei der gezeigten Anordnung ist, daß das Lagerelement im Bereich der Dichtlippe zwar eine geringere Wandstärke aufweist, jedoch dadurch keine ausreichende kraftmäßige Abkopplung zwischen dem Dichtbereich und dem Lagerbereich vorhanden ist. Bei der gezeigten Anordnung kann eine Dichtwirkung nur durch die angeformte Dichtlippe erreicht werden. Weil aber das Lagerelement üblicherweise aus einem relativ steifen, zur Lagerung geeigneten Material gefertigt ist, ist die Elastizität des Lagerelements im Bereich der Dichtlippe ziemlich gering und dadurch ist eine zuverlässige, dauerhaltbare Abdichtung nicht gewährleistet. Die Elastizität der Dichtlippe ist nicht ausreichend, um damit bei den bei üblicher Fertigung der abzudichtenden Körper auftretenden Toleranzen ein zuverlässiges Abdichten erreicht werden kann.

Durch das in Deutschland erschienene MM-Industriejournal, Würzburg, 77 (1971) 84, Seite 1918 ist ein sogenanntes wartungsfreies Dichtelement gezeigt. Das Dichtelement besteht aus einem metallischen Stützglied, mit dem Dichtlippe, Lagerteil und Abstreifer durch Vulkanisation verbunden sind. Bei diesem Dichtelement besteht jedoch der Nachteil, daß die elastische Vorspannung, mit dem die Dichtlippe vorgespannt sein muß, damit sie ihre Dichtfunktion erfüllen kann, mit demselben Werkstoff erzeugt wird, aus dem das Lagerteil besteht. Eine elastische Vorspannung der Dichtlippe ist deshalb nicht zuverlässig gewährleistet. Diese Konstruktion ist deshalb ein Kompromiß, der nicht immer zu zufriedenstellender Lagereigenschaft und Dichtfunktion führt.

Es soll nun insbesondere auch eine einfache Lagerdichtungsanordnung geschaffen werden, die aus möglichst wenigen, einfach herstellbaren Bauteilen besteht und trotzdem eine sichere, dauerhaltbare und dichte Lagerung und Abdichtung ergibt. Die Lagerdichtungsanordnung soll insbesondere sehr kostengünstig herstellbar sein und sich allein schon dadurch zur Herstellung in sehr großen Stückzahlen sehr gut eignen.

### Vorteile der Erfindung

Die erfindungsgemäß ausgeführte Lagerdichtungsanordnung mit den kennzeichnenden Merkmalen des Anspruchs 1 hat demgegenüber den Vorteil, daß bei insgesamt geringem Aufwand eine zuverlässige Lagerung und Abdichtung gewährleistet ist. Dadurch, daß bei dem Lagerelement ein Lagerbereich und ein Dichtbereich vorgesehen sind, werden insgesamt wenig Bauteile benötigt. Die Lagerdichtungsanordnung kann vorteilhafterweise so ausgebildet sein, daß das Spannelement mit dem Lagerelement vorab zusammengefügt werden kann, bevor das Lagerelement und das Spannelement mit den abzudichtenden und zu lagernden Körpern zusammengebaut wird. Dadurch verringert sich der Aufwand beim Zusammenbau wesentlich.

Weil das Spannelement den Dichtbereich des Lagerelements mit Vorspannung gegen einen der beiden Körper beaufschlagt, ist es nicht erforderlich, die für die Dichtwirkung notwendige elastische Vorspannung unmittelbar im Lagerelement zu erzeugen, so daß vorteilhafterweise für das Lagerelement ein zur Lagerung optimal geeignetes Material verwendet werden kann, ohne daß dabei die elastische Vorspannung mitberücksichtigt werden muß.

Durch das separate Spannelement erhält man den Vorteil, daß dadurch für das Spannelement der für die Elastizität optimal geeignete Werkstoff ausgewählt werden kann. Dadurch, daß das Spannelement nicht unmittelbar an beiden Körpern anliegt, sondern den Dichtbereich gegen einen der beiden Körper mit Vorspannung beaufschlagt, erhält man den Vorteil, daß unabhängig von den Reibeigenschaften des Spannelements zwischen dem Dichtbereich und den zugeordneten Körpern eine geringe Reibung und geringer Verschleiß erreichbar sind.

Weil das Spannelement zusätzlich auch noch als Abdichtung zwischen den beiden Körpern dient, ergibt sich vorteilhafterweise insgesamt ein geringer Aufwand, insbesondere bei der Formgebung des Lagerelements, und es ist vorteilhafterweise insgesamt nur eine kleine Baugröße erforderlich.

Durch die in den Unteransprüchen aufgeführten Maßnahmen sind vorteilhafte Weiterbildungen und Verbesserungen der im Hauptanspruch angegebenen Lagerdichtungsanordnung möglich.

Durch die Entkopplungseinrichtung des Lagerelements zwischen dem Lagerbereich und dem Dichtbereich erhält man den Vorteil, daß der Dichtbereich kraftmäßig so gut von dem Lagerbereich abgekoppelt werden kann, daß das Spannelement weitgehend unbeeinflußt vom Lagerbereich den Dichtbereich mit elastischer Vorspannung gegen den zugeordneten Körper beaufschlagen kann. Die Entkopplungseinrichtung hat den Vorteil, daß, trotz der kraftmäßigen Abkopplung in Vorspannrichtung, der Dichtbereich mit dem Lagerbereich verbunden ist, wodurch der Zusammenbau der Körper und der Lagerdichtungsanordnung wesentlich vereinfacht wird. Weil der Lagerbereich und der Dichtbereich über die Entkopplungseinrichtung miteinander verbunden sind, vereinfacht sich auch die Lagerhaltung, weil dadurch keine getrennten Bauteile gelagert werden müssen.

### Zeichnung

Bevorzugt ausgewählte, besonders vorteilhafte Ausführungsbeispiele der Erfindung sind in der Zeichnung vereinfacht dargestellt und in der nachfolgenden Beschreibung näher erläutert. Es zeigen die Figur 1 die Lagerdichtungsanordnung in eingebautem Zustand, die Figur 2 eine Schrägansicht auf das Lagerelement und das Spannelement, die Figur 3 einen Längsschnitt durch das Lagerelement und das Spannelement, die Figur 4 eine stirnseitige Ansicht auf das Lagerelement und das Spannelement, die Figur 5 eine Schrägansicht auf das Lagerelement, die Figur 6 einen Längsschnitt durch das Lagerelement, die Figur 7 eine stirnseitige Ansicht auf das Lagerelement und die Figur 8 ein zweites Ausführungsbeispiel.

### Beschreibung der Ausführungsbeispiele

Die erfindungsgemäß ausgeführte Lagerdichtungsanordnung kann immer dann angewendet werden, wenn zwei Körper zueinander gelagert werden sollen und wenn dabei auch noch eine Abdichtung des zwischen den beiden Körpern vorhandenen Spalts erfolgen soll. Die Lagerdichtungsanordnung ist dann besonders zweckmäßig, wenn einer der beiden Körper gegenüber dem jeweils anderen Körper drehbar, schwenkbar und/oder axial verschiebbar sein soll. Es gibt zwar bereits eine Vielzahl von Lagerdichtungsanordnungen, bei denen eine Lagerung und eine Abdichtung erfolgen kann, aber diese erfordern fast immer einen sehr hohen Herstellungsaufwand und/oder erzeugen eine relativ hohe Reibung und/oder die Abdichtung oder Lagerung ist nicht zufriedenstellend und nicht ausreichend dauerhaltbar. Die hier vorgeschlagene Lagerdichtungsanordnung ist besonders dann zweckmäßig, wenn auch die Kosten für die Herstellung eine Rolle spielen und wenn die Belastung der Lagerdichtungsanordnung durch die Drehzahl bzw. die Geschwindigkeit des bewegten Körpers nicht all zu groß ist. Die Lagerdichtungsanordnung ist insbesondere bei Kraftfahrzeugen an Stellen vorgesehen, an denen mittelmäßige Beanspruchungen auftreten.

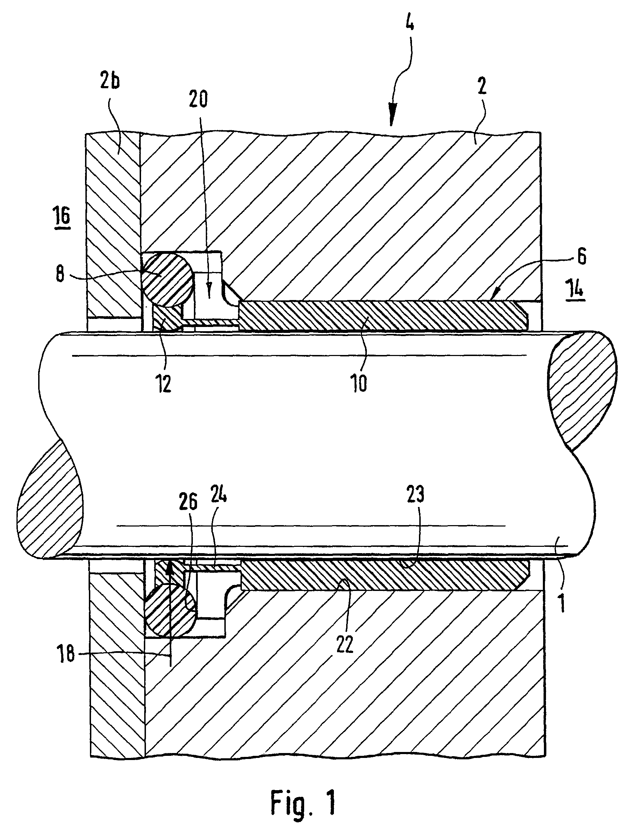

Die Figur 1 zeigt ein bevorzugt ausgewähltes, besonders vorteilhaftes erstes Ausführungsbeispiel.

Die **Figur 1** zeigt eine Lagerdichtungsanordnung 4 mit einem ersten Körper 1, einem zweiten Körper 2, einem Lagerelement 6 und einem Spannelement 8. Grob betrachtet hat das Lagerelement einen Lagerbereich 10 und einen Dichtbereich 12. Der Lagerbereich 10 und der Dichtbereich 12 bilden ein zusammenhängendes, einstückiges Bauteil. Das Lagerelement 6 mit dem Lagerbereich 10 und dem Dichtbereich 12 wird vorzugsweise aus Kunststoff in einer gemeinsamen Spritzgießform hergestellt.

Der zweite Körper 2 ist beispielsweise eine Gehäusewand. Auf einer Seite des Körpers 2 befindet sich beispielsweise ein innerer Raum 14 und auf der anderen Seite des Körpers 2 befindet sich beispielsweise ein äußerer Raum 16, beispielsweise die Umgebung. In den beiden Räumen 14 und 16 befinden sich häufig unterschiedliche Fluide und/oder unterschiedlich hohe Drücke. Deshalb muß dafür gesorgt werden, daß zwischen dem Körper 1 und dem Körper 2 kein offener Spalt vorhanden ist, durch den das Fluid aus dem Raum 14 in den Raum 16 bzw. aus dem Raum 16 in den Raum 14 strömen kann. Bei den Fluiden handelt es sich beispielsweise um Flüssigkeiten, Pasten oder Gase.

Der erste Körper 1 soll gegenüber dem zweiten Körper 2 gut und mit möglichst wenig Spiel und häufig auch mit möglichst geringer Reibung gelagert sein, was mit der hier vorgeschlagenen Lagerdichtungsanordnung 4 mit sehr wenig Aufwand leicht und sicher erreicht wird. Die Lagerung des ersten Körpers 1 im zweiten Körper 2 erfolgt durch den Lagerbereich 10 des Lagerelements 6. Für das Lagerelement 6 kann problemlos ein Werkstoff ausgewählt werden, mit dem im Lagerbereich 10 eine dauerhaltbare und gute sowie reibungsarme Lagerung des ersten Körpers 1 gewährleistet ist, wobei dabei auch die auf das Lagerelement 6 einwirkenden Fluide in den Räumen 14 und 16 mitberücksichtigt werden können. Das Lagerelement 6 besteht vorzugsweise aus einem formstabilen, verschleißfesten und reibungsarmen Werkstoff.

Zwischen dem Dichtbereich 12 und dem Lagerbereich 10 hat das Lagerelement 6 eine Entkopplungseinrichtung 20.

Durch den zweiten Körper 2 verläuft eine mehrfach abgestuft ausgeführte Öffnung hindurch. Die Öffnung mündet in den Raum 14 und in den Raum 16. Die Öffnung wird beispielsweise während des Spritzgießens des zweiten Körpers 2 oder nach dem Formen des zweiten Körpers 2 durch Bohren nachträglich hergestellt. Die Öffnung hat eine beim dargestellten Ausführungsbeispiel mehrfach abgestuft ausgeführte, äußere Lagerwand 22 und eine glatte zylindrische innere Lagerwand 23. Die äußere Lagerwand 22 wird von einem Teilbereich der Oberfläche des zweiten Körpers 2 gebildet, und ein Teilbereich der Oberfläche des ersten Körpers 1 bildet die innere Lagerwand 23.

Wie nachfolgend erläutert, hat das Spannelement 8 neben einer spannenden Funktion auch eine dichtende Funktion. Deshalb wird dieses Element 8 nachfolgend als Spannelement-Dichtelement 8 bezeichnet.

Das Spannelement-Dichtelement 8 drückt an der dem ersten Körper 1 abgewandten Seite des Dichtbereichs 12 radial auf den Dichtbereich 12 des Lagerelements 6. Auf der dem Dichtbereich 12 abgewandten Seite stützt sich das Spannelement-Dichtelement 8 an der äußeren Lagerwand 22 ab. Weil in radialer Richtung der für das Spannelement-Dichtelement 8 zur Verfügung stehende Raum kleiner als die radiale Dicke des Spannelement-Dichtelement 8 ist, entsteht in dem Spannelement-Dichtelement 8 eine Pressung in radialer Richtung. Dadurch entsteht eine elastische Vorspannkraft, mit der das Spannelement-Dichtelement 8 den Dichtbereich 12 des Lagerelements 6 gegen den ersten Körper 1 beaufschlagt. Die Vorspannkraft wirkt in der radial nach innen gerichteten Vorspannrichtung. In der Figur 1 ist ein Pfeil 18 eingetragen. Der Pfeil 18 symbolisiert die Vorspannkraft und auch die Vorspannrichtung der Vorspannkraft. Deswegen erhalten nachfolgend die Vorspannkraft und die Vorspannrichtung das Bezugszeichen 18.

Die elastische Vorspannkraft 18 entsteht im wesentlichen durch die elastische Verformung des Spannelement-Dichtelements 8 und diese Vorspannkraft 18 bleibt auch dauerhaft erhalten, insbesondere weil sich das Spannelement-Dichtelement 8 an seinem äußeren Umfang an der äußeren Lagerwand 22 abstützen kann. Der Raum, in dem sich das Spannelement-Dichtelement 8 befindet ist so dimensioniert, daß ausreichend Volumen vorhanden ist, daß sich das Spannelement-Dichtelement 8 in ausreichender Weise zur Seite hin elastisch verformen kann. Für die elastische Verformung des Spannelement-Dichtelements 8 steht ein ausreichender Raum zur Verfügung.

Für das Spannelement-Dichtelement 8 kann ein einfacher, meistens handelsüblicher Dichtring verwendet werden. Das Spannelement-Dichtelement 8 ist beispielsweise ein sehr kostengünstig beziehbarer Dichtring mit einem O-förmigen Querschnitt. Das Spannelement-Dichtelement 8 besteht vorzugsweise aus einem elastischen Werkstoff, insbesondere aus einem elastischen, gummiartigen Werkstoff.

Abhängig vom Elastizitätsmodul des Werkstoffs des Lagerelements 6 und abhängig von der Vorspannkraft 18 wird die radiale Dicke des Dichtbereichs 12 dimensioniert. Die radiale Dicke des Dichtbereichs 12 wird höchstens so dick gewählt, daß die Vorspannkraft 18 in der Lage ist, den Dichtbereich 12 ausreichend stark gegen den ersten Körper 1 zu pressen, um eine ausreichende Dichtungswirkung zu erhalten. Der Dichtbereich 12 sorgt aber auch dafür, daß das Spannelement-Dichtelement 8 nicht direkt an dem sich bewegenden Körper 1 anliegen muß, was eine unerwünscht große Reibung und einen unerwünscht schnellen Verschleiß bedeuten würde.

Die Entkopplungseinrichtung 20 ist so ausgebildet, daß in der Vorspannrichtung 18, d. h. beim dargestellten Ausführungsbeispiel in radialer Richtung, keine Kräfte bzw. höchstens vernachlässigbar kleine Kräfte zwischen dem Lagerbereich 10 und dem Dichtbereich 12 des Lagerelements 6 übertragen werden. Dadurch ist es möglich, den Lagerbereich 10 so formstabil auszubilden, wie es für eine optimale gegenseitige Lagerung der beiden Körpers 1 und 2 zueinander erforderlich ist, ohne daß dadurch die Dichtwirkung im Bereich des Dichtbereichs 12 beeinträchtigt wird. Die Entkopplungseinrichtung 20 ist in der Vorspannrichtung 18 so nachgiebig, daß das Spannelement-Dichtelement 8 ohne Beeinträchtigung durch die Verbindung zwischen dem Lagerbereich 10 und dem Dichtbereich 12 den Dichtbereich 12 mit der für die gute Dichtwirkung erforderlichen ausreichenden Vorspannkraft 18 gegen den ersten Körper 1 spannen kann. An seinem äußeren Umfang dichtet das Spannelement-Dichtelement 8 durch elastische Anlage an der äußeren Lagerwand 22 mit elastischer Vorspannung.

Die Entkopplungseinrichtung 20 wird dadurch gebildet, daß mindestens ein den Dichtbereich 12 mit dem Lagerbereich 10 mechanisch verbindender Steg 24 vorgesehen ist. Beim bevorzugt ausgewählten Ausführungsbeispiel sind es vier Stege 24, die, gleichmäßig über den Umfang verteilt, den Lagerbereich 10 und den Dichtbereich 12 des Lagerelements 6 zusammenhalten. Die Stege 24 halten den Lagerbereich 10 und den Dichtbereich 12 zusammen, bevor das Lagerelement 6 in die äußere Lagerwand 22 eingebaut wird. Weil der Steg 24 in Richtung der Verbindung zwischen dem Lagerbereich 10 und dem Dichtbereich 12 ziemlich lang und quer dazu ziemlich dünn ausgebildet ist, werden zwischen dem Dichtbereich 12 und dem Lagerbereich 10 in radialer Richtung keine Kräfte übertragen. Zumindest aber sind diese Kräfte nur so klein, daß sie die auf den Dichtbereich 12 wirkende Vorspannkraft 18 nicht negativ beeinträchtigenden können. Mit anderen Worten ausgedrückt, ist der mindestens eine Steg 24 in der Vorspannrichtung 18 ziemlich dünn und quer zur Vorspannrichtung 18 ziemlich lang ausgebildet. Der Steg 24 des Lagerelements 6 ist in Verbindungsrichtung zwischen dem Lagerbereich 10 und dem Dichtbereich 12 ziemlich lang, und in radialer Richtung und vorzugsweise auch in Umfangsrichtung betrachtet ist der Steg 24 ziemlich dünn ausgebildet. Der Steg 24 ist vorzugsweise in der Vorspannrichtung 18 dünner, meistens sogar sehr viel dünner als der Dichtbereich 12 des Lagerelements 6, und quer zur Vorspannrichtung 18, d. h. in der Verbindunsrichtung, ist der Steg 24 vorzugsweise mindestens doppelt so lang wie seine Dicke in Vorspannrichtung 18. Noch besser ist es, wenn der Steg 24 in der Verbindungsrichtung mehrfach so lang wie seine Dicke in Vorspannrichtung 18 ist.

Mit Hilfe des mindestens einen Stegs 24 bilden der Lagerbereich 10 und der Dichtbereich 12 das zusammenhängende Lagerelement 6. Zusätzlich ist es möglich, auch das Spannelement-Dichtelement 8 vor seinem Einbau in die Körper 1 und 2 mit dem Lagerelement 6 zu verbinden. Aufgrund gewisser elastischer Dehnung in Umfangsrichtung des Spannelement-Dichtelements 8 hält das Spannelement-Dichtelement 8 auf dem Dichtbereich 12 des Lagerelements 6, ohne herunterzufallen. Dadurch entsteht eine zusammenhängende Baueinheit, die sehr leicht gelagert und mit wenigen Handgriffen bzw. mit wenigen Maschinenbewegungen in die Öffnung mit der äußere Lagerwand 22 eingebaut werden kann.

Zwecks Erleichterung des Einbaus des Lagerelements 6 zusammen mit dem Spannelement-Dichtelement 8 in die äußere Lagerwand 22 kann bei Bedarf noch ein als Abdeckung dienender weiterer Körper 2b vorgesehen werden. Nach dem Einbau des Lagerelements 6 und des Spannelement-Dichtelements 8 wird der weitere Körper 2b fest mit dem zweiten Körper 2 verbunden, beispielsweise durch Schrauben.

Am Lagerelement 6 ist eine dem Spannelement-Dichtelement 8 zugewandte Stützfläche 26 vorgesehen. Die Stützfläche 26 ist an den Lagerbereich 10 angeformt und erstreckt sich über die Entkopplungseinrichtung 20 hinaus, so weit, daß das Spannelement-Dichtelement 8 auf den Außenumfang des Dichtbereichs 12 des Lagerelements 6 aufgeschoben werden kann, bis das Spannelement-Dichtelement 8 an der Stützfläche 26 anliegt und sich dabei im wesentlichen axial mittig bezüglich dem Dichtbereich 12 am Außenumfang des Dichtbereichs 12 befindet. Auch nach dem Einbau der aus dem Lagerelement 6 und dem Spannelement-Dichtelement 8 bestehenden Einheit in die äußere Lagerwand 22, sorgt die Stützfläche 26 dafür, daß das Spannelement-Dichtelement 8 in seiner vorgesehenen Lage gehalten wird, ohne daß das Spannelement-Dichtelement 8 in unzulässiger Weise in den Bereich der Entkopplungseinrichtung 20 hineinrutscht.

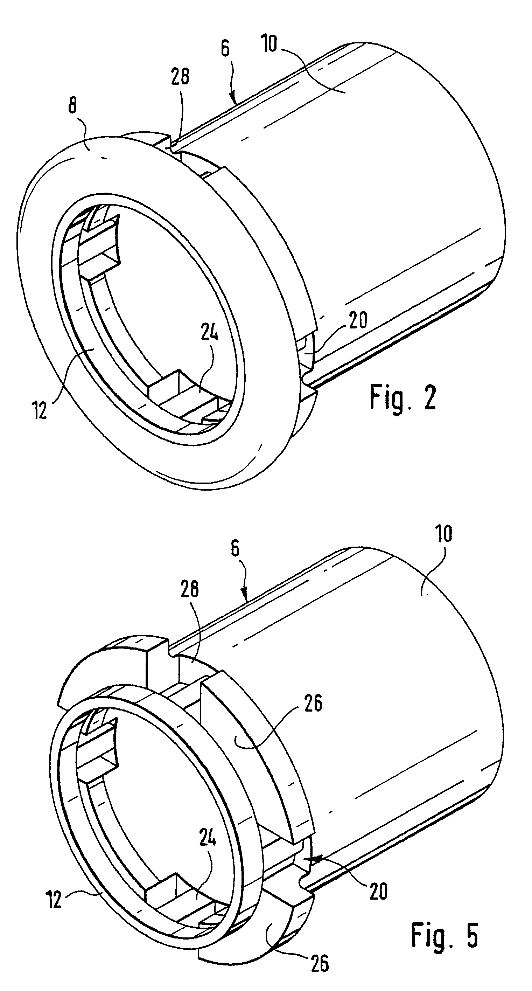

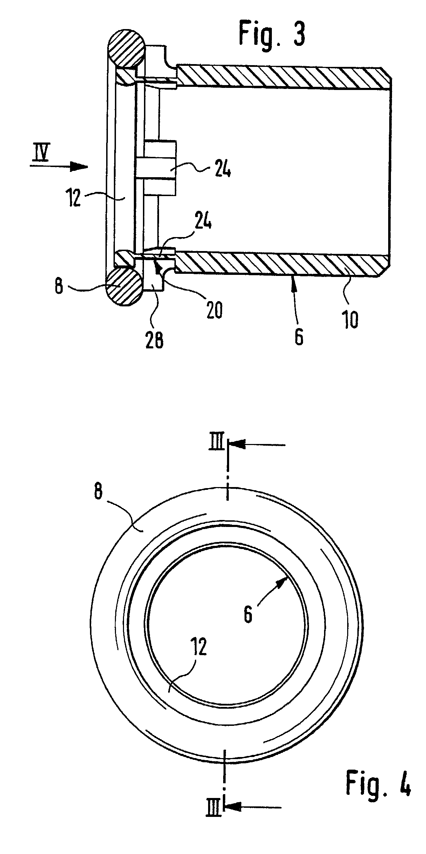

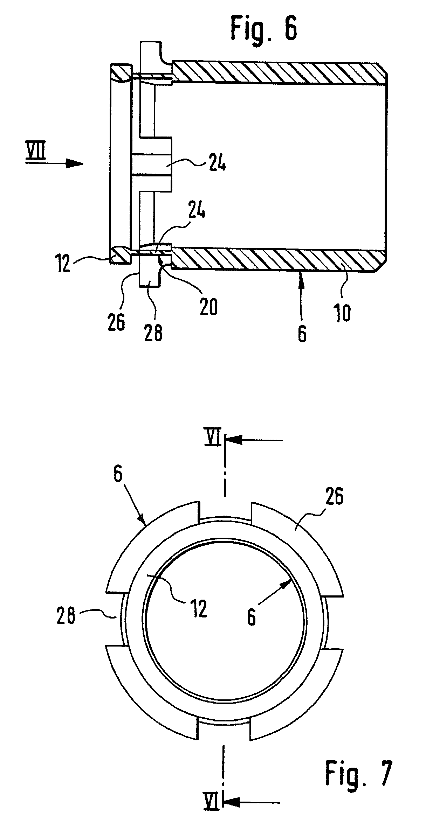

Um wesentliche Einzelheiten des Erfindungsgegenstandes deutlich erkennen zu können, sind unterschiedliche Einzelheiten des Erfindungsgegenstandes in unterschiedlichen Ansichten in mehreren Figuren dargestellt. Die Figuren 2, 3 und 4 zeigen das Lagerelement 6 und das mit dem Lagerelement 6 zusammengebaute Spannelement-Dichtelement 8, bevor diese Baueinheit mit den Körpern 1 und 2 zusammengebaut wird. Die **Figur 2** zeigt das Lagerelement 6 und das Spannelement-Dichtelement 8 schräg von der Seite. Die **Figur 3** zeigt einen Längsschnitt der in der Figur 4 mit III - III markierten Schnittebene. Die **Figur 4** zeigt eine in der **Figur 3** mit IV markierte stirnseitige Ansicht. Die Figuren 5, 6 und 7 zeigen das Lagerelement 6 als Einzelteil, bevor das Spannelement-Dichtelement 8 hinzugefügt wird. Die **Figur 5** zeigt das Lagerelement 6 schräg von der Seite. Die **Figur 6** zeigt einen Längsschnitt durch das Lagerelement 6 in der in der Figur 7 mit VI - VI markierten Schnittebene. Die **Figur 7** zeigt eine stirnseitige Ansicht auf das Lagerelement 6, wobei die Blickrichtung in der Figur 6 mit VII markiert ist.

In allen Figuren sind gleiche oder gleichwirkende Teile mit denselben Bezugszeichen versehen. Sofern nichts Gegenteiliges erwähnt bzw. in der Zeichnung dargestellt ist, gilt das anhand eines der Figuren Erwähnte und Dargestellte auch bei den anderen Ausführungsbeispielen. Sofern sich aus den Erläuterungen nichts anderes ergibt, sind die Einzelheiten der verschiedenen Ausführungsbeispiele miteinander kombinierbar.

Im Bereich der Stege 24 ist jeweils eine Entkopplungsaussparung 28 vorgesehen. Diese Entkopplungsaussparung 28 dient dazu, daß der Steg 24 zusammen mit den übrigen Teilen des Lagerelements 6 auf einfachste Weise spritztechnisch hergestellt und sehr leicht entformt werden kann. Ein besonderes Merkmal ist auch, daß der Dichtbereich 12 nicht unmittelbar und starr mit der Stützfläche 26 verbunden ist, sondern der Dichtbereich 12 ist nur über die Stege 24 an die übrigen Bereiche des Lagerelements 6 angekoppelt.

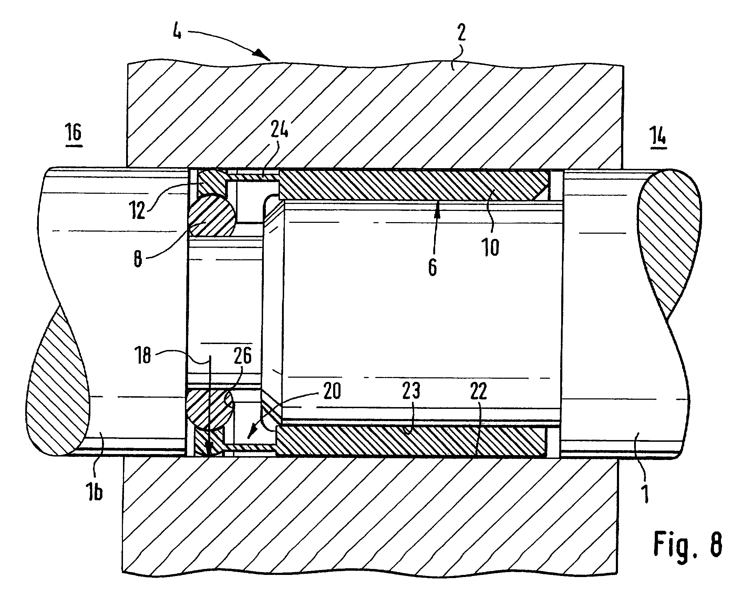

Die **Figur 8** zeigt ein zweites, besonders vorteilhaftes, bevorzugt ausgewähltes Ausführungsbeispiel.

Im Unterschied zu dem in den vorhergehenden Figuren dargestellten Ausführungsbeispiel ist bei dem in der Figur 8 gezeigten Ausführungsbeispiel die innere Lagerwand 23 an dem im zweiten Körper 2 drehbar und/oder verschiebbar gelagerten ersten Körper 1 mehrfach abgestuft ausgeführt. Der Lagerbereich 10 des Lagerelements 6 ist auf die innere Lagerwand 23 aufgepreßt; und zwischen dem Lagerbereich 10 und dem zweiten Körper 2 ist gerade so viel Spiel, daß die gewünschte Beweglichkeit des ersten Körpers 1 gewährleistet ist. Das Spannelement-Dichtelement 8 stützt sich radial nach innen hin an der inneren Lagerwand 23 ab und drückt radial nach außen gegen den Dichtbereich 12 des Lagerelements 6. Dadurch entsteht die radial nach außen gerichtete Vorspannrichtung 18 der Vorspannkraft 18, die den Dichtbereich 12 elastisch gegen den zweiten Körper 2 beaufschlagt.

## Patentansprüche

1. Lagerdichtungsanordnung, zum Lagern eines ersten Körpers (1) in einem zweiten Körper (2) und zum Abdichten zwischen dem ersten Körper (1) und dem zweiten Körper (2), mit einem Lagerelement (6) und mit einem Spannelement (8), wobei das Lagerelement (6) mindestens einen Lagerbereich (10) und mindestens einen Dichtbereich (12) aufweist, wobei der Lagerbereich (10) zum Lagern des ersten Körpers (1) in dem zweiten Körper (2) dient, und der Dichtbereich (12) zum Abdichten zwischen den beiden Körpern (1, 2) dient, wobei das Spannelement (8) den Dichtbereich (12) in einer Vorspannrichtung (18) mit einer Vorspannkraft (18) gegen einen der beiden Körper (1, 2) beaufschlagt, dadurch gekennzeichnet, daß das Spannelement (8) ein zwischen dem ersten Körper (1) und dem zweiten Körper (2) abdichtendes Dichtelement (8) ist.

2. Lagerdichtungsanordnung nach Anspruch 1, dadurch gekennzeichnet, daß zwischen dem Lagerbereich (10) und dem Dichtbereich (12) eine Entkopplungseinrichtung (20) vorgesehen ist.

3. Lagerdichtungsanordnung nach Anspruch 2, dadurch gekennzeichnet, daß die Entkopplungseinrichtung (20) in der Vorspannrichtung (18) keine die Vorspannkraft (18) beeinträchtigende Kraft überträgt.

4. Lagerdichtungsanordnung nach einem der Ansprüche 1 bis 3, dadurch gekennzeichnet, daß zwischen dem Lagerbereich (10) und dem Dichtbereich (12) mindestens ein den Dichtbereich (12) mit dem Lagerbereich (10) verbindender Steg (24) vorgesehen ist, wobei der Steg (24) in der Vorspannrichtung (18) dünn in Verbindungsrichtung zwischen dem Lagerbereich (10) und dem Dichtbereich (12) lang ausgebildet ist.

5. Lagerdichtungsanordnung nach Anspruch 4, dadurch gekennzeichnet, daß der Steg (24) in der Vorspannrichtung (18) dünner als der Dichtbereich (12) des Lagerelements (10) und in Verbindungsrichtung mindestens doppelt so lang wie in Vorspannrichtung (18) ausgebildet ist.

6. Lagerdichtungsanordnung nach einem der Ansprüche 1 bis 5, dadurch gekennzeichnet, daß an dem Lagerbereich (10) des Lagerelements (6) eine das Spannelement (8) quer zur Vorspannrichtung (18) abstützende Stützfläche (26) vorgesehen ist.

7. Lagerdichtungsanordnung nach Anspruch 6, dadurch gekennzeichnet, daß die Stützfläche (26) durch mindestens eine Entkopplungsaussparung (28) unterbrochen ist.

8. Lagerdichtungsanordnung nach einem der Ansprüche 1 bis 7, dadurch gekennzeichnet, daß das Dichtelement (8) ein Dichtring (8) ist.

9. Lagerdichtungsanordnung nach einem der Ansprüche 1 bis 8, dadurch gekennzeichnet, daß das Dichtelement (8) im wesentlichen einen O-förmigen Querschnitt hat.

10. Lagerdichtungsanordnung nach einem der Ansprüche 1 bis 9, dadurch gekennzeichnet, daß das Lagerelement (6) aus einem formstabilen Werkstoff besteht.

11. Lagerdichtungsanordnung nach einem der Ansprüche 1 bis 10, dadurch gekennzeichnet, daß das Lagerelement (6) aus einem reibungsarmen Werkstoff besteht.

12. Lagerdichtungsanordnung nach einem der Ansprüche 1 bis 11, dadurch gekennzeichnet, daß das Dichtelement (8) aus einem elastischen Werkstoff besteht.

13. Lagerdichtungsanordnung nach einem der Ansprüche 1 bis 12, dadurch gekennzeichnet, daß das Dichtelement (8) aus einem gummiartigen Werkstoff besteht.
